# EUROPEAN PATENT APPLICATION

(11) **EP 4 711 400 A1**
(43) Date of publication of application: **18.03.2026**
(21) Application number: 25175687.0
(22) Date of filing: 12.05.2025
(51) Int. Cl.: C08G 73/10, C09D 179/08

(54) **PROCESS FOR PREPARING WATER-BASED POLYIMIDES**

(71) Applicant: ASTA Energy Solutions GmbH, 2755 Oed (AT)
(72) Inventor: CIRAK, Suljo, 2700 Wiener Neustadt (AT)
(74) Representative: Gassner, Birgitta

(57) **Abstract**

The present invention relates to a novel process for preparing water-based polyimides from a polycarboxylic acid or its anhydride compound and a diamine compound.

## Description

### Field of the Invention

The present invention relates to a novel process for preparing water-based polyimides.

### Background Art

Polyimides are valuable materials for a wide range of applications. They are usually synthesized by polycondensation of diamines with tetracarboxylic acids or dianhydrides thereof in solution or in the molten or even in the solid state.

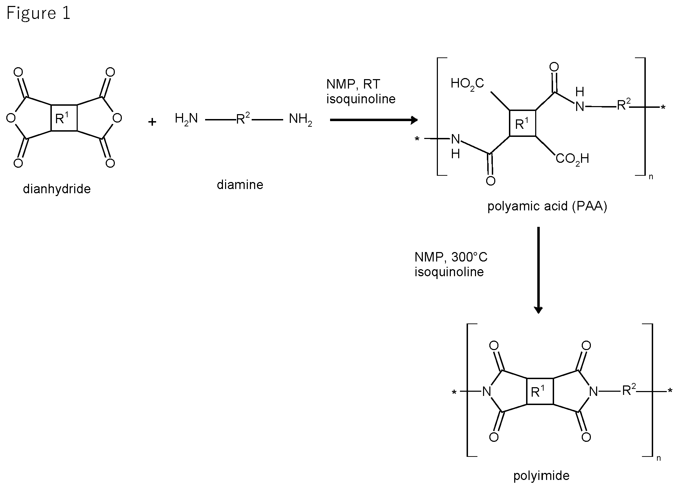

For polyimide synthesis dianhydrides and diamines as monomers are typically used, which then react at room temperature to form a soluble polyamic acid intermediate (see Fig. 1). N-Methylpyrrolidone (NMP), for example, may be used as a solvent.

The final polyimide is obtained by a condensation reaction of polyamic acid intermediates, which can be carried out either thermally, wherein high temperatures are required, or chemically by using dehydrating agents which will release water as a byproduct.

Polyimide processing can only be carried out at relatively low concentrations, since high viscosities occur even at low concentrations of the starting compounds.

WO2021258120A describes a process for preparing polyimide films, wherein an aqueous solution of the monomeric salts of a tetracarboxylic acid and a diamine are subjected to a processing step and to a subsequent heating step for polycondensation and simultaneously evaporating the water, wherein the polycondensation step is carried out at temperatures of about 375° C or higher.

Therefore, there is still the need for an energy efficient process for preparing polyimides which may be used as wire varnish.

### Summary of invention

It is the object of the present invention to provide a process for preparing polyimides with low energy consumption. The object is solved by the subject matter of the present invention.

According to the invention, there is provided a method for producing a water-based polyimide, comprising the steps of:
a) mixing a polycarboxylic acid or an anhydride thereof with a diamine compound in a polar protic solvent to yield a monomeric salt;
b) isolating the monomeric salt;
c) adding the monomeric salt stepwise to an aqueous solution comprising water and a co-solvent, wherein the solution is kept at a temperature in the range of about 20 to 40° C, and the surface tension of the solution is adjusted to be in the range of 28 to 40 mN/m;
d) stirring the solution of step c) until a clear solution is obtained; and
e) treating the solution under latent conditions until the polyimide is obtained.

### Brief description of drawings

Fig. 1 depicts a comparative process scheme according to the state of the art.

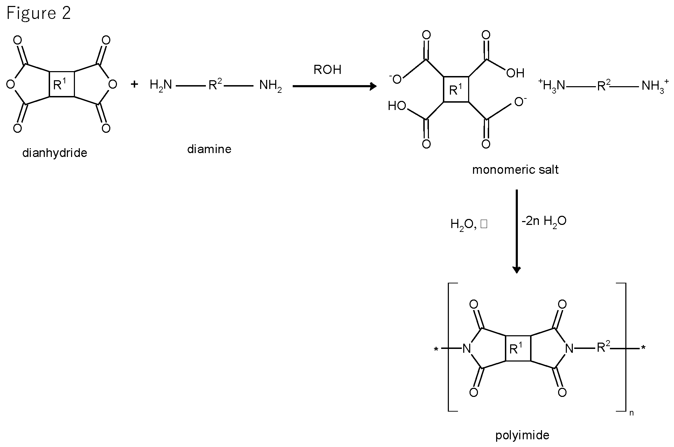

Fig. 2 depicts a scheme of a process according to the present invention.

### Description of Embodiments

The present invention provides a method for producing a water-based polyimide, comprising the steps of:
a) mixing a polycarboxylic acid or an anhydride thereof with a diamine compound in a polar protic solvent to yield a monomeric salt;
b) isolating the monomeric salt;
c) adding the monomeric salt stepwise to an aqueous solution comprising water and a co-solvent, wherein the solution is kept at a temperature in the range of about 20 to 40° C, and the surface tension of the solution is adjusted to be in the range of 28 to 40 mN/m;
d) stirring the solution of step c) until a clear solution is obtained; and
e) treating the solution under latent conditions until the polyimide is obtained.

One embodiment of the invention relates to a method for producing a water-based polyimide of general formula (IV), comprising the steps of:
a) mixing a compound of formula (I) with a compound of formula (II) 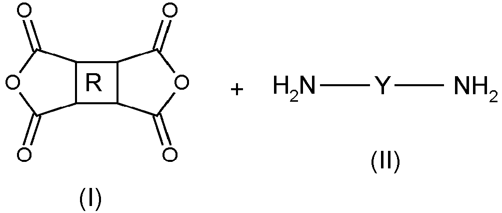 in a polar protic solvent to yield a monomeric salt of general formula (III); 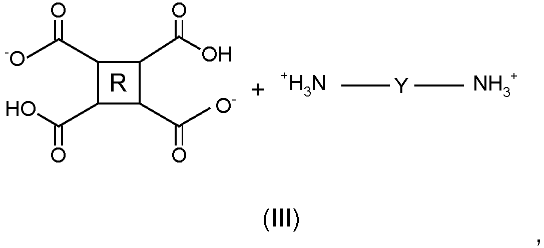
b) isolating the monomeric salt of general formula (III);
c) adding the monomeric salt of general formula (III) stepwise to an aqueous solution comprising water and a co-solvent, wherein the solution is kept at a temperature in the range of about 20 to 40° C, and the surface tension of the solution is adjusted to be in the range of 28 to 40 mN/m;
d) stirring the solution of step c) until a clear solution is obtained; and
d) treating the solution under latent conditions until the desired compound of formula (IV) is obtained; 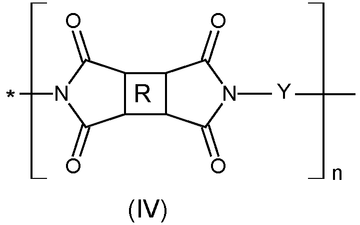
wherein
R denotes a C₄-C₆alkyl, C₃-C₇cycloalkyl, C₃-C₆heterocycloalkyl, diaromatic ketone, or heterocyclic ether;
Y denotes C₁₋₁₅alkyl or an optionally substituted C₃-C₇cycloalkyl; and n is ≥2.

Unless specified otherwise, the term "cycloalkyl" refers to monocyclic hydrocarbon rings such as cyclopropyl, cyclobutyl, cyclopentyl, cyclohexyl and bicycloheptyl.

The term "heterocycloalkyl" refers to groups which are derived from cycloalkyl as hereinbefore defined and wherein in the hydrocarbon rings one or more of the groups -CH₂- are replaced independently of one another by -O-, -S- or -NH-. Representatives of heterocycloalkyl compounds are oxiranyl, thiiranyl, aziridinyl, oxetanyl, thietanyl, azetidinyl, oxolanyl, thiolanyl, pyrrolidinyl, oxanyl, thianyl, piperidinyl, piperazinyl, morpholinyl, thiomorpholinyl, 1,4-oxathianyl, and the like.

A diaromatic ketone has the structure of R₁-C(=O)-R₂, where R₁ and R₂ are independently aryl. The term "aryl" refers to an aromatic radical that is composed exclusively of carbon and hydrogen. Exemplary aryl groups include phenyl, naphthyl, and biphenyl.

Suitable heterocyclic ethers include tetrahydrofuran and dioxane for example.

Suitable polycarboxylic acid compounds are, for example, depicted in Table 1.

**Table 1**

| | | |
|---|---|---|
| 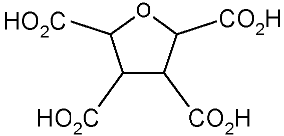 | 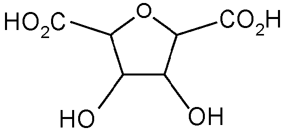 | 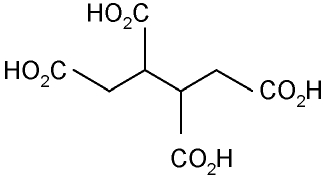 |
| tetrahydrofuran tetracarboxylic acid | 3,4-dihydroxy-2,5-oxacyl cyclopentane dicarboxylic acid | butane-1,2,3,4-tetracarboxylic acid |
| 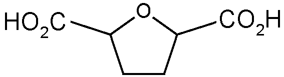 | 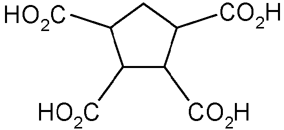 | 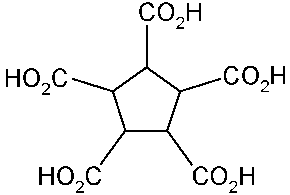 |
| tetrahydrofuran-2,5-dicarboxylic acid | cyclopentane tetracarboxylic acid | cyclopentane-1,2,3,4,5-pentacarbocylic acid |
| 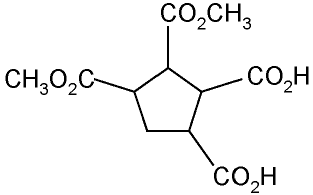 | 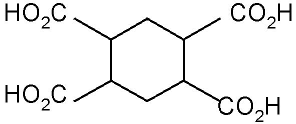 | 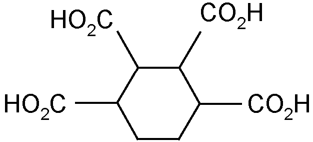 |
| cyclopentane-1α,2α,3α,4α-tetracarboxylic acid, 1,2-dimethyl ester | cyclohexane-1,2,4,5-tetracarboxylic acid (mixture of isomers) | cyclohexane-1,2,3,4-tetracarboxylic acid (mixture of isomers) |
| 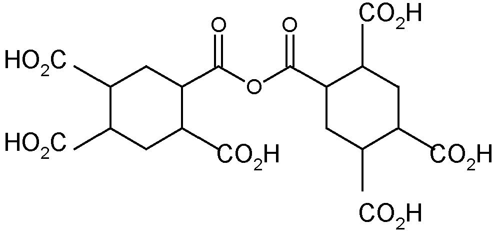 | | 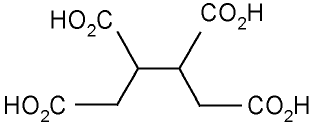 |
| cyclohexane-1,2,4,5-tetracarboxylic anhydride | | butane-1,2,3,4-tetracarboxylic acid (mixture of isomers) |
| 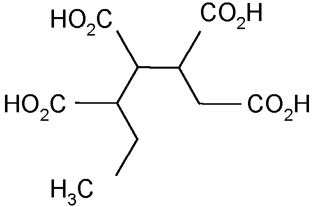 | 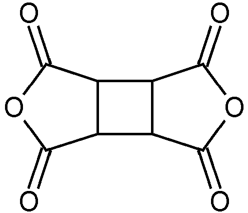 | 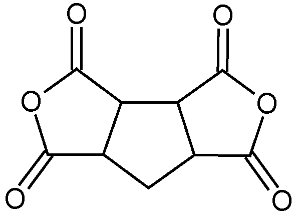 |
| hexane-1,2,3,4-tetracarboxylic acid | 1,2,3,4-cyclobutane tetracarboxylic dianhydride | 1,2,3,4-cyclopentanetetracarboxylic dianhydride |
| 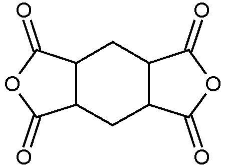 | 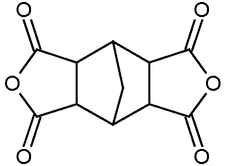 | 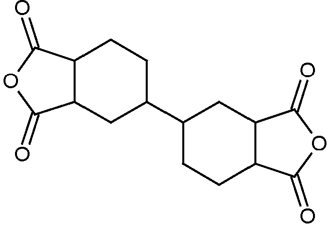 |
| 1,2,4,5-cyclohexanetetracarboxylic dianhydride | tetrahydro-4,8-ethano benzo[1,2-c:4,5-c']difuran-1,3,5,7(3aH,7aH)-tetraone | dicyclohexyl-3,4,3',4'-tetracarboxylic dianhydride |
| 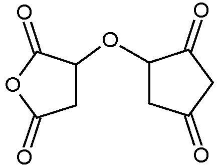 | 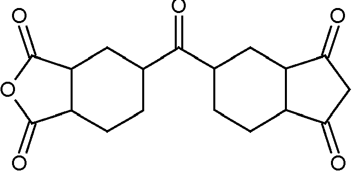 | |
| 3-[(2,4-dioxocyclopentyl) oxy]oxolane-2,5-dione | 4,4'-carbonyldiphthalic anhydride | |
| 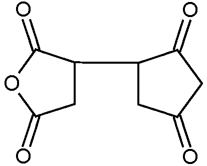 | 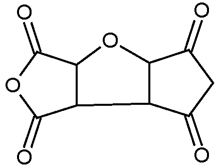 | |
| 3-(2,4-dioxocyclopentyl)oxolane-2,5-dione | tetrahydro-1H-cyclopenta [b]furo[3,4-d]furan-1,3,5,7(6H)-tetrone | |

The diamine compound may be an aliphatic or cycloaliphatic diamine. Representatives of such diamines are for example, propane-1,3-diamine, butane-1,4-diamine, pentane-1,2-diamine, 2,2-dimethylpropane-1,3-diamine, hexane-1,6-diamine, 2-methylpentane-1,5-diamine, heptane-1,7-diamine, octane-1,8-diamine, nonane-1,9-diamine, decane-1,10-diamine, undecane-1,11-diamine, dodecane-1,12-diamine, tridecane-1,13-diamine, tetradecane-1,14-diamine, pentadecane-1,15-diamine, 1,2-cyclohexanediamine, 1,3-cyclohexanediamine, 1,4-cyclohexane-diamine, 1,3-bis(aminomethyl)cyclohexane, 1,4-bis(aminomethyl)cyclohexane, bis(aminomethyl)-norbornane, 4,4'-methylenebis(cyclohexylamine), 4,4'-methylenebis(2-methylcyclohexylamine), isophoronediamine, and the like.

Suitable diamine compounds are, for example, depicted in Table 2.

**Table 2**

| | | |
|---|---|---|
| 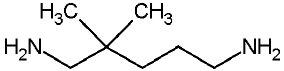 | 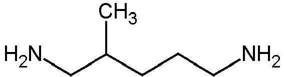 | 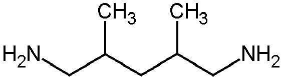 |
| 2,2-dimethyl-1,5-diaminopentane | 2-mehtyl-1,5-diaminpentane | *meso*-2,4-dimethylcadaverine |
| 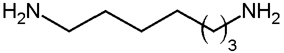 | 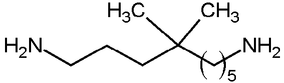 | 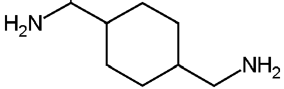 |
| 1,9-diaminononane | 4,4-dimethylnonane-1,9-diamine | 1,4-bis(aminomethyl)cyclohexane |
| 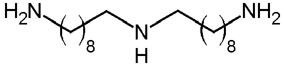 | 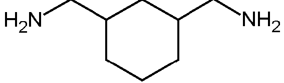 | 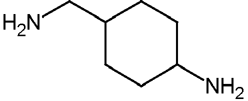 |
| *N-*(9-aminononyl)nonane-1,9-diamine | 1,3-bis(aminomethyl)cyclohexane (mixture of isomers) | 4-aminomethylcyclohexylamine (mixture of isomers) |

The term "solvent," as used herein, refers to a liquid that dissolves a solid, liquid, or gaseous solute, resulting in a solution. "Co-solvent" refers to a second, solvent used with a primary solvent.

Polar protic solvents have high dielectric constants (greater than 5) and high dipole moments. They possess O-H or N-H bonds and can participate in hydrogen bonding. These solvents can also serve as acids (sources of protons) and weak nucleophiles (forming bonds with strong electrophiles). Examples of suitable polar protic solvents include alcohols such as methanol, ethanol, n-propanol, isopropanol, n-butanol, isobutanol, t-butanol, and t-amyl alcohol.

Typical co-solvents include short-chain alcohols or tensides such as for example, butanol, butylglycol, or butyldiglycol.

According to one embodiment of the invention, there is provided a method for producing a water-based polyimide resin wherein a polycarboxylic acid or an anhydride thereof is suspended in a polar protic solvent. Isopropanol may be used as polar protic solvent. Upon vigorous stirring and heating under reflux, a clear solution of the mixture is obtained. This solution is cooled down to room temperature and a diamine compound is added to the clear solution and stirred vigorously to obtain a monomeric salt. The resulting monomeric salt is insoluble in the polar protic solvent and precipitates.

The precipitate is isolated from the suspension. To remove traces of unreacted co-monomers additional polar protic solvent is added to redisperse the unreacted co-monomers. The centrifugation and decantation procedure are repeated. Subsequently, the supernatant is discarded and the isolated monomeric salt powder is dried under high vacuum until a constant weight is achieved.

The obtained monomeric salt is water soluble powder.

)The surface tension of water is about 72.75 mN/m (at 20° C). However, for coating systems the surface tension should be in the range of about 28 and 40 mN/m. Therefore, the water-based coating systems must be adjusted accordingly. Co-solvents such as short-chain alcohols or tensides may be as auxiliary agents.

A further embodiment relates to the method as described herein, wherein the monomer salt is present in an amount of about 20 to 80%, or of about 30 to 75%, or of about 40 to 70 %, or of about 50 to 65%, or of about 55 to 65%.

The co-solvent may be present in an amount of about 1 to 10%, or of about 1 to 9%, or of about 1 to 8%, or of about 1 to 7%, or of about 1 to 6%, or of about 1 to 5%, or of about 1 to 4%.

According to one embodiment of the invention, n-butanol is used as a co-solvent resulting in a reduced surface tension of about 28 and 36 mN/m, which is suitable for copper winding wire coating.

The addition of the co-solvent further improves the rheological properties, e.g., through edge coverage or through shear stability of the coating solution (pumping).

According to one embodiment of the invention, the clear solution is treated under latent conditions until the polyimide is obtained. Latent conditions refer to conditions wherein energy is applied, e.g., heat or thermal energy.

### Examples

The Examples which follow are set forth to aid in the understanding of the invention but are not intended to and should not be construed to limit the scope of the invention in any way. The Examples do not include detailed descriptions of conventional methods. Such methods are well known to those of ordinary skill in the art.

### Example 1 - Synthesis guidelines

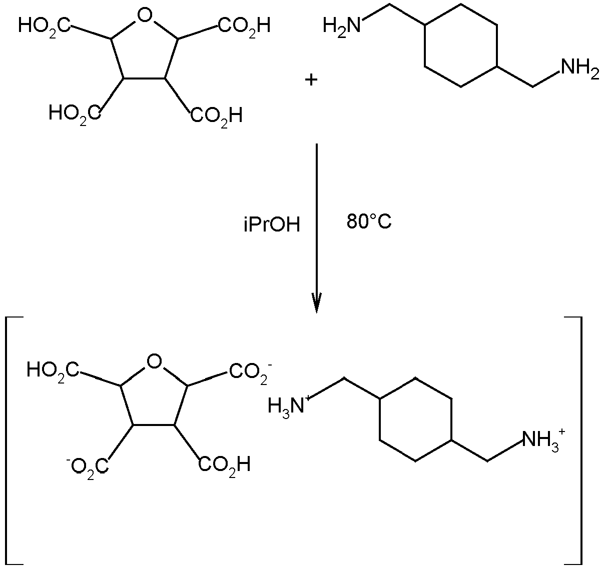

1 Equiv. tetrahydrofuran-2,3,4,5-tetracarboxylic acid [6 g, 24 mmol] is suspended in 200 mL isopropanol (*i*PrOH). Upon vigorous stirring and heating to 80 ° C under reflux a clear solution is obtained. This solution is cooled down in air to room temperature (r.t.).

1 Equiv. of ± 1,4-bis(aminomethyl)cyclohexane [3.4 g, 3.6 mL, 24 mmol] is added directly to the clear solution of the acid using a micropipette whilst vigorous stirring for 1 hour under standard conditions (1 atm. 25 ° C).

The resulting pale yellow monomer salt precipitate is isolated from the suspension via centrifugation à 11.500 rpm for 10 minutes. The supernatant solution is decanted. The wet monomer salt precipitate still contains traces of unreacted co-monomers. To remove these, further *i*PrOH is added to the wet monomer salt precipitate in the centrifuge tubes, and a redispersion is generated by stirring. The centrifugation and decantation procedure are repeated. Subsequently, the supernatant is discarded, and the isolated monomer salt powder is dried under high vacuum until a constant weight is achieved.

Table 3 provides an overview of the chemicals employed in the synthesis of the water-soluble monomer salt powder.

**Table 3. List of chemicals used for the synthesis of the monomer salt**

| **Item** | **CAS** | **Mw [g.mol⁻¹]** | **Density [g.mL^{- 1}]** |
|---|---|---|---|
| Tetrahydrofuran-2,3,4,5-tetracarboxylic acid | 26106-63-8 | 248.14 | - |
| ± 1,4-Bis(aminomethyl)cyclohexane | 2549-93-1 | 142.25 | 0.95 |
| p.a. Isopropanol | 67-63-0 | 60.10 | 0.79 |
| Distilled water | 7732-18-5 | 18.02 | 1.00 |

### Example 2 -Synthesis guidelines

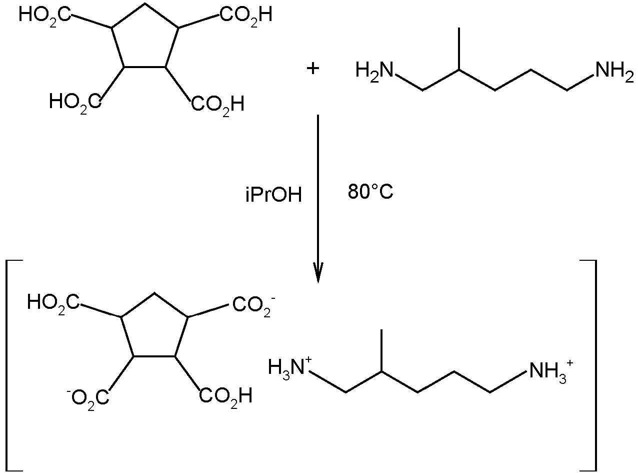

1 equiv. Cyclopentane-1,2,3,4-tetracarboxylic acid [6 g, 24 mmol] is suspended in 200 mL Isopropanol (i PrOH). Upon vigorous stirring and heating to 80 ° C under reflux a clear solution is obtained. This solution is cooled down in air to room temperature (r.t.).

1 equiv. of 2-Methyl-1,5-diaminopentane [2.8 g, 3.2 mL, 24 mmol] is added directly to the clear solution of the acid using a micropipette whilst vigorous stirring for 1 hour under standard conditions (1 atm and 25° C).

The resulting white monomeric salt precipitate is isolated from the suspension via centrifugation at 11,500 rpm for 10 minutes, the supernatant solution is decanted. The wet monomeric salt precipitate still contains traces of unreacted co-monomers. To remove these, further i PrOH is added to the wet MS precipitate in the centrifuge tubes, and a redispersion is generated by stirring. The centrifugation and decantation procedure is repeated. Subsequently, the supernatant is discarded and the isolated monomeric salt powder is dried under high vacuum until a constant weight is achieved.

Table 4 provides an overview of the chemicals employed in the synthesis of the water-soluble monomer salt powder.

**Table 4. List of chemicals used for the synthesis of the monomer salt**

| **Item** | **CAS** | **Mw [g.mol**^{**-** 1}] | **Density [g.mL**^{**-** 1}] |
|---|---|---|---|
| Cylopentane-1,2,3,4-tetracarboxylic acid | 3724-52-5 | 246.17 | - |
| 2-Methyl-1,5-diaminopentane | 15520-10-2 | 116.21 | 0.87 |
| p.a. Isopropanol | 67-63-0 | 60.10 | 0.79 |
| Distilled water | 7732-18-5 | 18.02 | 1.00 |

### Example 3 - Synthesis guidelines

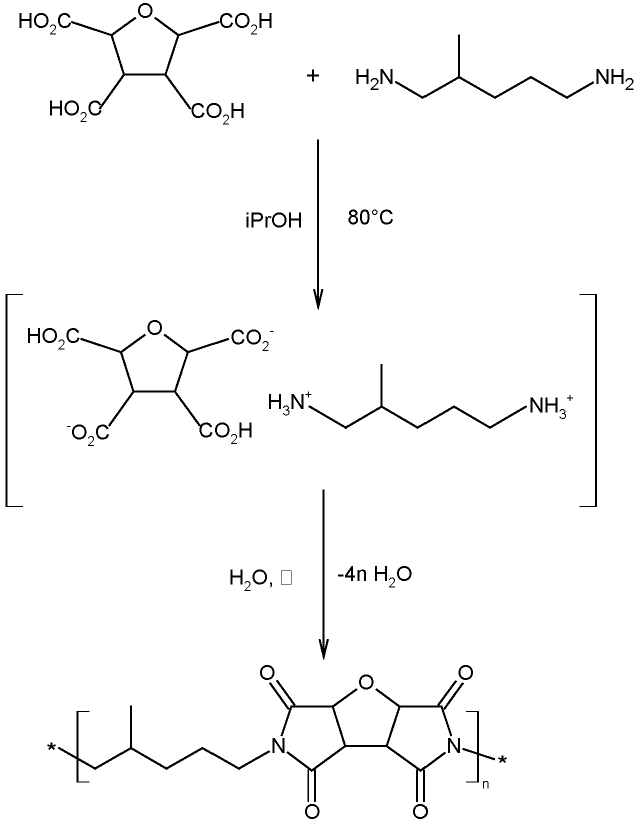

1 Equiv. tetrahydrofuran-2,3,4,5-tetracarboxylic acid [6 g, 24 mmol] is suspended in 200 mL Isopropanol (*i*PrOH). Upon vigorous stirring and heating to 80 ° C under reflux a clear solution is obtained. This solution is cooled down in air to room temperature (r.t.).

1 Equiv. of 2-methyl-1,5-diaminopentane [2.8 g, 3.25 mL, 24 mmol] is added directly to the clear solution of the acid using a micropipette whilst vigorous stirring for 1 hour under standard conditions (1 atm and 25° C).

The resulting pale yellow MS precipitate is isolated from the suspension via centrifugation at 11.500 rpm for 10 minutes, the supernatant solution is decanted. The wet MS precipitate still contains traces of unreacted co-monomers. To remove these, further iPrOH is added to the wet MS precipitate in the centrifuge tubes, and a redispersion is generated by stirring. The centrifugation and decantation procedure are repeated. Subsequently, the supernatant is discarded and the isolated MS powder is dried under high vacuum until a constant weight is achieved.

Table 5 provides an overview of the chemicals employed in the synthesis of the water-soluble monomer salt powder.

**Table 5. List of chemicals used for the synthesis of the monomer salt**

| **Item** | **CAS** | **Mw [g.mol**^{**-** 1}] | **Density [g.mL**^{**-** 1}] |
|---|---|---|---|
| Tetrahydrofuran-2,3,4,5-tetracarboxylic acid | 26106-63-8 | 248.14 | - |
| 2-Methyl-1,5-diaminopentane | 15520-10-2 | 116.21 | 0.86 |
| p.a. Isopropanol | 67-63-0 | 60.10 | 0.79 |
| Distilled water | 7732-18-5 | 18.02 | 1.00 |

### Example 4 - Enameling oven process

The conductor is guided via diverting wheels to the enameling tank, where the copper wire is coated with enamel wherein the enamel comprises at least one polyimide as described herein. The enamel is applied by using dies or application felts. These enamels are processed continuously in a vertically or horizontally positioned oven. The coated wire is exposed to temperatures between 300-550 ° C in the enameling oven. As the dwell time of the wires to be coated in the coating oven is between 20 and 60 seconds, the wires are only heated to temperatures of max. 250 ° C for a short period of time.

A number of chemical and/or physical processes take place during the transfer of the coating into the end product. In the oven itself, physical processes of solvent evaporation (in this case water and co-solvents) are overlapped on the chemical crosslinking processes. The energy required for this is provided as heat radiation and/or circulating air heat. The temperatures and dwell times, i.e. extraction speeds, depend on the type of coating, the wire diameter and the coating machine.

The rheological behavior during application and film formation of the insulating coating systems is mainly determined by the evaporation behavior of the solvent (water). After coating, the wire is returned via deflection rollers to the coating unit outside the oven and is thus brought to the desired insulation wall thickness (20 and 180 µm) in several layers (up to 30).

Modern ovens are equipped with a circulating air circuit that runs with or against the direction of the wire and absorbs the solvents (in this case co-solvents) released during burning. With the addition of small quantities of fresh air, these solvents (co-solvents) are burned thermally or catalytically. The energy resulting from the combustion can be added to the drying process and used to heat the circulating air.

## Claims

1. A method for producing a water-based polyimide, comprising the steps of:
a) mixing a polycarboxylic acid or an anhydride thereof with a diamine compound in a polar protic solvent to yield a monomeric salt;
b) isolating the monomeric salt;
c) adding the monomeric salt stepwise to an aqueous solution comprising water and a co-solvent, wherein the solution is kept at a temperature in the range of about 20 to 40° C, and the surface tension of the solution is adjusted to be in the range of 28 to 40 mN/m;
d) stirring the solution of step c) until a clear solution is obtained; and
e) treating the solution under latent conditions until the polyimide is obtained.

2. The method of claim 1, wherein the polar protic solvent is water, a C₁-C₆ short-chain alcohol, or a mixture thereof.

3. The method of claim 1 or 2, wherein the monomer salt of formula (III) is comprised in the aqueous solution in the range of about 20 - 80 wt.%, specifically of about 55 - 65 wt.%.

4. The method of any one of claims 1 to 3, wherein the aqueous solution comprises between 1 - 10 wt.% of a co-solvent, specifically of 1 - 4 wt.%.

5. The method of any one of claims 1 to 4, wherein the co-solvent is a C₁-C₆ short-chain alcohol or a glycolether.

6. The method of claim 5, wherein the C₁-C₆ short-chain alcohol is n-butanol.

7. The method of claim 5, wherein the glycolether is butylglycol, or butyldiglycol.

8. A method for producing a water-based polyimide of any one of claims 1 to 7,
wherein said anhydride is a compound of formula (I); 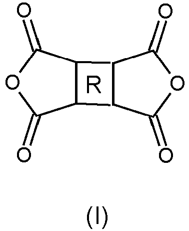
the diamine is a compound of formula (II)
+ H₂N-Y- NH₂ (II)
the monomeric salt of general formula (III); 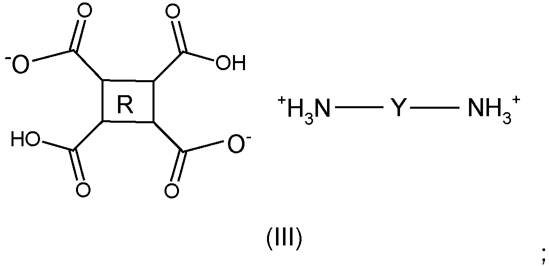
and the polyimide is a compound of formula (IV); 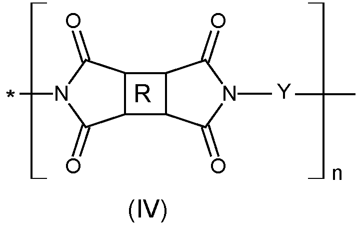
wherein
R denotes a C₄-C₆alkyl, C₃-C₇cycloalkyl, C₃-C₆heterocycloalkyl, diaromatic ketone, or heterocyclic ether;
Y denotes C₁-₁₅alkyl or an optionally substituted C₃-C₇cycloalkyl; and
n is ≥2.
